# EUROPEAN PATENT APPLICATION

(11) **EP 4 708 457 A1**
(43) Date of publication of application: **11.03.2026**
(21) Application number: 25189826.8
(22) Date of filing: 16.07.2025
(51) Int. Cl.: H01M 10/613, H01M 10/617, H01M 10/63, H01M 10/6568

(54) **ENERGY STORAGE SYSTEM**

(30) Priority: 02.09.2024 KR 20240118514
(71) Applicant: SAMSUNG SDI CO., LTD., Yongin-si, Gyeonggi-do 17084 (KR)
(72) Inventor: KWAK, Eunok, 17084 Yongin-si, Gyeonggi-do (KR); KIM, Jae-Soon, 17084 Yongin-si,Gyeonggi-do (KR); KIM, Daae, 17084 Yongin-si,Gyeonggi-do (KR); KIM, Jinbeom, 17084 Yongin-si,Gyeonggi-do (KR); KIM, Woochoul, 17084 Yongin-si,Gyeonggi-do (KR)
(74) Representative: Gulde & Partner

(57) **Abstract**

The present disclosure provides an energy storage system (10). The energy storage system (10) includes: a plurality of battery modules (40) each of which battery module (40) includes a plurality of battery cells (50); a first cooling system (100) that cools a first battery module set (42) among the plurality of battery modules (40); a second cooling system (102) that cools a second battery module set (44) among the plurality of battery modules (40); a central valve (300) that controls a flow of a refrigerant between the first cooling system (100) and the second cooling system (102); and a battery management system (200) that monitors and controls operations of the plurality of battery modules (40), the first cooling system (100), the second cooling system (102), and the central valve (300). The battery management system (200) controls the central valve (300) to control the flow of the refrigerant between the first cooling system (100) and the second cooling system (102) depending on whether an abnormality occurs in the operation of any one of the first cooling system (100) and the second cooling system (102).

## Description

### FIELD

The present disclosure relates to an energy storage system.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e. g., home and/or utility scale power storage). A secondary battery generally includes an electrode assembly composed of a positive electrode and a negative electrode, a case accommodating the same, and electrode terminals connected to the electrode assembly.

An energy storage system (ESS) is configured to connect renewable energy sources, such as wind power and solar power in which generation output cannot be controlled, to an existing power grid, and charge or discharge energy according to a power consumption pattern. In particular, an energy storage system using a secondary battery can be used not only to stabilize a system voltage and a frequency, but also to store surplus energy in conjunction with renewable energy generation systems in which generation output is not stable, such as wind power or solar power, and to supply energy to loads by discharging energy stored in the battery.

In these energy storage systems, one of important factors is efficient management of a temperature of the battery. For example, heat may be generated during a battery charging/discharging process. For this reason, managing a temperature deviation between battery modules or battery packs included in an energy storage system such that the temperature deviation is prevented from increasing may be an important factor in improving the efficiency of the energy storage system. Further, by preventing a temperature deviation between batteries included in an energy storage system from increasing, a life of the battery can be extended, and thus, the energy storage system can stably supply power.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

The present invention provides an energy storage system for solving the above problems.

These and other aspects and features of the present disclosure will be described in or will be apparent from the following description of embodiments of the present disclosure.

According to some aspects of the present disclosure, there is provided an energy storage system including: a plurality of battery modules each of which battery module includes a plurality of battery cells; a first cooling system that cools (e. g. is configured to cool) a first battery module set among the plurality of battery modules; a second cooling system that cools (e. g. is configured to cool) a second battery module set among the plurality of battery modules; a central valve that controls (e. g. is configured to control) a flow of a refrigerant between the first cooling system and the second cooling system; and a battery management system that monitors and controls (e. g. is configured to monitor and control) operations of the plurality of battery modules, the first cooling system, the second cooling system, and the central valve, in which the battery management system controls (e. g. is configured to control) the central valve to control the flow of the refrigerant between the first cooling system and the second cooling system depending on whether an abnormality occurs in the operation of any one of the first cooling system and the second cooling system.

In other words, the battery module may include at least a first battery module set and a second battery module set, wherein each battery module set includes a plurality of battery cells. The battery cells of the sets may be different battery cells.

In other words, the central valve may be configured to distribute the refrigerant flow between the first and second cooling systems.

In other words, in this embodiment, the battery management system is responsible for actuating the central valve, thereby managing the distribution of refrigerant flow between the first and second cooling systems. Therefore, the battery management system may be configured to operate the central valve in such a way that it regulates the refrigerant flow between the first and second cooling circuits. Efficient temperature management is crucial because uneven temperature distribution between battery modules can lead to performance degradation, reduced lifespan, and safety risks. By minimizing temperature deviation, the system ensures uniform operation of all battery cells, enhances overall efficiency, and helps prevent issues such as thermal runaway or capacity imbalance.

An abnormality in the operation of any one of the first cooling system and the second cooling system may refer to any irregular or faulty behavior occurring in either the first or the second cooling system. This may include issues such as unexpected temperature deviations, reduced cooling efficiency, sensor malfunctions, flow interruptions or blockages, or component failures (e.g., pump, fan, valve). In other words, the battery management system may be configured to control the central valve to control the flow of coolant between the first cooling system and the second cooling system in response to or based on a detected, determined or occurring abnormality in the operation of the first cooling system or the second cooling system.

According to some aspects, the battery management system may be configured to determine or to detect the abnormality occurring in the operation of any one of the first cooling system and the second cooling system.

According to some aspects, the battery management system may include a monitoring unit, a control unit, and a battery current-rate control unit. The monitoring unit may be configured to monitor operations of the plurality of battery modules, the first cooling system, the second cooling system, and the central valve. The control unit may be configured to control the central valve to control the flow of the refrigerant between the first cooling system and the second cooling system depending on whether an abnormality occurs in the operation of any one of the first cooling system and the second cooling system. The battery current-rate control unit may be configured to control a current-rate (C-rate) of the plurality of battery cells included in each of the plurality of battery modules.

According to some aspects, the first cooling system may include a first cooler that cools (e. g. is configured to cool) the first battery module set and a first cooling passage that allows (e. g. is configured to allow) the refrigerant to circulate between the first cooler and the first battery module set, and the second cooling system may include a second cooler that cools (e. g. is configured to cool) the second battery module set and a second cooling passage that allows (e. g. is configured to allow) the refrigerant to circulate between the second cooler and the second battery module set.

According to some aspects, each of the first cooling system and the second cooling system may include a temperature sensor installed at the first cooling passage or the second cooling passage, and the battery management system may be configured to monitor whether an abnormality occurs in the operation of any one of the first cooling system and the second cooling system based on temperature information that is output from the temperature sensor. In other words, at least one of the first cooling system and the second cooling system may include a temperature sensor, wherein the respective temperature sensor is installed (e. g. disposed) at the corresponding first or second cooling passage. In other words, each of the first and second cooling systems may optionally include a temperature sensor, with the sensor, if present, being installed at the respective first or second cooling passage. In other words, the battery management system may be configured to detect, determine or monitor temperature information based on temperature measurement values output from the temperature sensor (or temperature sensors) and to determine that an abnormality occurs in the operation of any one of the first cooling system and the second cooling system based on the temperature information.

The term "temperature information" may denote or refer to temperature measurement data generated and transmitted by the sensor, corresponding to the thermal conditions at its installation site. In other words, temperature information that is output from the temperature sensor may refer to data representing the measured temperature at the location where the sensor is installed.

According to some aspects, the battery management system may be configured to determine that an abnormality occurs when a temperature deviation between the first cooling system and the second cooling system increases to a first threshold value or higher, and/or when a temperature of the first cooling system and/or the second cooling system increases to a second threshold value or higher. In other words, the battery management system may be configured to determine temperature information that is output from the temperature sensor related to the first cooling system and from the temperature sensor related to the second cooling system and to determine a deviation between both temperature informations. The temperature deviation or temperature may be included in the deviation between both temperature informations or in the respective temperature information.

According to some aspects, the energy storage system may further include a first relay. In a circumstance where an abnormality in the operation of any one of the first cooling system and the second cooling system is detected, the battery management system may transmit (e. g. may be configured to transmit) a control signal to the first relay, and the first relay may control (e. g. may be configured to control) to open the central valve in response to reception of the control signal. In other words, upon receiving of the control signal, the first relay may be configured to trigger an opening operation of the central valve.

In other words, a circumstance where an abnormality in the operation of any one of the first cooling system and the second cooling system is detected may refer to a circumstance in which the battery management system detects an abnormality in the operation of either the first cooling system or the second cooling system.

According to some aspects, the energy storage system may further include a second relay. In a circumstance where an abnormality in the operation of any one of the first cooling system and the second cooling system is detected, the battery management system may transmit (e. g. may be configured to transmit) a control signal to the second relay, and the second relay may control (e. g. may be configured to control) to close a shut-off valve related to a cooling system in which an abnormality in the operation has occurred (e. g. has been detected) in response to reception of the control signal. In other words, upon receiving of the control signal, the second relay may be configured to trigger a closing operation of the shut-off valve.

According to some aspects, the shut-off valve related to the first cooling system may be installed between the first cooler and the first cooling passage, and/or the shut-off valve related to the second cooling system may be installed between the second cooler and the second cooling passage, to control the flow of the refrigerant between the respective cooler and the respective cooling passage included in the cooling system in which an abnormality in the operation has occurred.

According to some aspects, in a circumstance where the battery management system detects an abnormality in the operation of any one of the first cooling system and the second cooling system (e. g. in a circumstance where an abnormality in the operation of any one of the first cooling system and the second cooling system is detected), the battery management system may control (e. g. may be configured to control) a current-rate of the plurality of battery cells included in the first battery module set or in the second battery module set related to the cooling system of any one of the first cooling system and the second cooling system in which the abnormality in the operation has occurred (e. g. has been detected) such that their current-rate is reduced.

According to some aspects, in a circumstance where the battery management system detects an abnormality in the operation of any one of the first cooling system and the second cooling system (e. g. in a circumstance where an abnormality in the operation of any one of the first cooling system and the second cooling system is detected), the battery management system may control (e. g. may be configured to control) a current-rate of the plurality of battery cells included in each of the plurality of battery modules such that the current-rate of the plurality of battery cells is reduced.

According to some aspects, in a circumstance where the battery management system detects an abnormality in the operation of any one of the first cooling system and the second cooling system (e. g. in a circumstance where an abnormality in the operation of any one of the first cooling system and the second cooling system is detected), the battery management system may control (e. g. may be configured to control) the current-rate of the plurality of battery cells such that the current-rate of the plurality of battery cells is reduced by half.

According to some aspects, the energy storage system may further include a third cooling system. In a circumstance where the battery management system detects an abnormality in the operation of any one of the first cooling system and the second cooling system (e. g. in a circumstance where an abnormality in the operation of any one of the first cooling system and the second cooling system is detected), the battery management system may cause (e. g. may be configured to cause or control) the third cooling system to operate to cool at least a part of the plurality of battery modules instead of a cooling system (e. g. of any one of the first cooling system and the second cooling system) in which an abnormality in the operation has occurred (e. g. has been detected).

According to some aspects, the battery management system may be configured to close the central valve in a case where the third cooling system is operated.

In other words, a circumstance where the third cooling system is operated may refer to a circumstance in which the third cooling system is caused to operate to cool at least a part of the plurality of battery modules instead of a cooling system (e. g. of any one of the first cooling system and the second cooling system) in which an abnormality in the operation has occurred (e. g. has been detected).

According to some aspects, in a circumstance where the third cooling system is operated, the battery management system may control (e. g. may be configured to control) to open a shut-off valve related to the third cooling system. This shut-off valve may to be distinguished from the shut-off valve related to a cooling system in which the abnormality in operation has occurred, namely the shut-off valve related to either the first or the second cooling system, which is controlled in response to reception of the control signal. When the shut-off valve related to the third cooling system is opened the cooler of the third cooling system may provide the refrigerant to the related battery modules instead of the cooling system in which an abnormality in the operation has occurred.

According to some aspects, in a circumstance where the third cooling system is operated (e. g. in a circumstance where an abnormality in the operation of any one of the first cooling system and the second cooling system is detected), the battery management system may control (e. g. may be configured to control) a current-rate of the plurality of battery cells included in the first battery module set or in the second battery module set related to the cooling system of any one of the first cooling system and the second cooling system in which the abnormality in the operation has occurred (e. g. has been detected) such that their current-rate is increased.

According to some aspects, in a circumstance where the third cooling system is operated, the battery management system may control (e. g. may be configured to control) a current-rate of the plurality of battery cells included in each of the plurality of battery modules such that the current-rate of the plurality of battery cells is increased.

According to some aspects, in a circumstance where the third cooling system is operated, the battery management system may control the current-rate of the plurality of battery cells such that the current-rate of the plurality of battery cells is increased by two times.

According to some aspects, the refrigerant may be a coolant.

According to some aspects, the energy storage system may further include a plurality of battery racks each of which battery rack includes the plurality of battery modules; and at least one battery container that includes the plurality of battery racks. A battery rack is a structural framework designed to hold and organize multiple battery units in a safe, stable, and accessible manner.

According to some aspects of the present disclosure, there is provided an energy storage system including: a plurality of battery modules each of which battery module includes a plurality of battery cells; a first cooler that cools (e. g. is configured to cool) a first battery module set among the plurality of battery modules; a second cooler that cools (e. g. is configured to cool) a second battery module set among the plurality of battery modules; a first cooling passage that allows (e. g. is configured to allow) a refrigerant to circulate between the first cooler and the first battery module set; a second cooling passage that allows (e. g. is configured to allow) a refrigerant to circulate between the second cooler and the second battery module set; a central valve that controls (e. g. is configured to control) a flow of a refrigerant between the first cooling passage and the second cooling passage; and a battery management system that monitors and manages (e. g. is configured to monitor and manage) operations of the plurality of battery modules, the first cooler, the second cooler, and the central valve, in which the battery management system controls (e. g. is configured to control) the central valve to control the flow of the refrigerant between the first cooling passage and the second cooling passage depending on whether an abnormality occurs in the operation of any one of the first cooler and the second cooler.

According to some aspects, the energy storage system may further include a first relay. In a circumstance where an abnormality in the operation of any one of the first cooler and the second cooler is detected, the battery management system may transmit (e. g. may be configured to transmit) a control signal to the first relay, and the first relay may control (e. g. may be configured to control) to open the central valve in response to reception of the control signal.

According to some aspects, the energy storage system may further include a second relay. In a circumstance where an abnormality in the operation of any one of the first cooler and the second cooler is detected, the battery management system may transmit (e. g. may be configured to transmit) a control signal to the second relay, and the second relay may control (e. g. may be configured to control) to close a shut-off valve related to a cooler in which an abnormality in the operation has occurred in response to reception of the control signal.

According to some aspects, in a circumstance where the battery management system detects an abnormality in the operation of any one of the first cooler and the second cooler, the battery management system may control (e. g. may be configured to control) a current-rate of the plurality of battery cells included in each of the plurality of battery modules such that the current-rate of the plurality of battery cells is reduced.

According to some aspects, the energy storage system may further include a third cooling system. In a circumstance where the battery management system detects an abnormality in the operation of any one of the first cooler and the second cooler, the battery management system may cause (e. g. may be configured to cause) the third cooling system to operate to allow the refrigerant to circulate through a cooling passage connected to a cooler in which an abnormality in the operation has occurred.

According to some aspects, the battery management system may be configured to close the central valve in a case where the third cooling system is operated.

The energy storage system according to some aspects of the present disclosure includes a plurality of cooling systems for cooling a plurality of battery modules, and controls (e. g. is configured to control) a flow of a refrigerant between the plurality of cooling systems through a central valve. Thereby, it is possible to efficiently manage a temperature of battery cells included in a battery container.

The energy storage system according to some aspects of the present disclosure controls a flow of a refrigerant between the plurality of cooling systems through the central valve. Thereby, even in a circumstance where an abnormality occurs in the operation of any one cooling system among the plurality of cooling systems, it is possible to manage the energy storage system such that a temperature deviation between battery cells, which are included in a plurality of battery modules connected to the plurality of cooling systems, is prevented from increasing. According to the management, the efficiency of the energy storage system can be improved, and the energy storage system can stably supply power.

The energy storage system according to some aspects of the present disclosure controls a flow of a refrigerant between the plurality of cooling systems through a central valve. In a circumstance where an abnormality in the operation of any one of the plurality of cooling systems is detected, a battery current-rate control unit reduces a current-rate of the battery cells, and thus, heat generation in the battery cells can be reduced. Thereby, it is possible to prevent the cooling system in which an abnormality in the operation is not detected from being overloaded.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be constructed as being limited to the drawings.
FIG. 1 is a diagram illustrating a configuration of an energy storage system according to some aspects of the present disclosure.
FIG. 2 is a diagram illustrating a specific configuration of a cooling system in the energy storage system of FIG. 1.
FIG. 3 is a diagram for explaining a principle of an operation of a central valve according to some aspects of the present disclosure.
FIG. 4 is a block diagram illustrating an internal configuration of a battery management system according to some aspects of the present disclosure.
FIG. 5 is a diagram for explaining a flow of a refrigerant according to some aspects of the present disclosure.
FIG. 6 is a diagram for explaining a process in which the battery management system according to some aspects of the present disclosure controls the central valve.
FIG. 7 is a diagram for explaining a process in which the battery management system according to some aspects of the present disclosure controls a shut-off valve.
FIG. 8 is a diagram for explaining a process in which the battery management system according to some aspects of the present disclosure controls a battery current-rate.
FIG. 9 is a perspective view of a battery rack according to some aspects of the present disclosure.
FIG. 10 is a perspective view of a battery module according to some aspects of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to one another, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As used herein, singular forms include plural forms unless the context clearly indicates that each element is singular. Further, plural forms include singular forms unless the context clearly indicates that each element is plural. It will be further understood that the form "a part includes a component", when used in this specification, does not mean excluding other components, but rather that the part may include other components, unless otherwise stated.

In the present disclosure, the sizes of layers and regions shown in the drawings indicate relative sizes and may be exaggerated for clarity of illustration. That is, the sizes shown in the drawings are only for convenience of understanding and are not limited thereto. Further, throughout the specification, the same reference numerals designate the same elements.

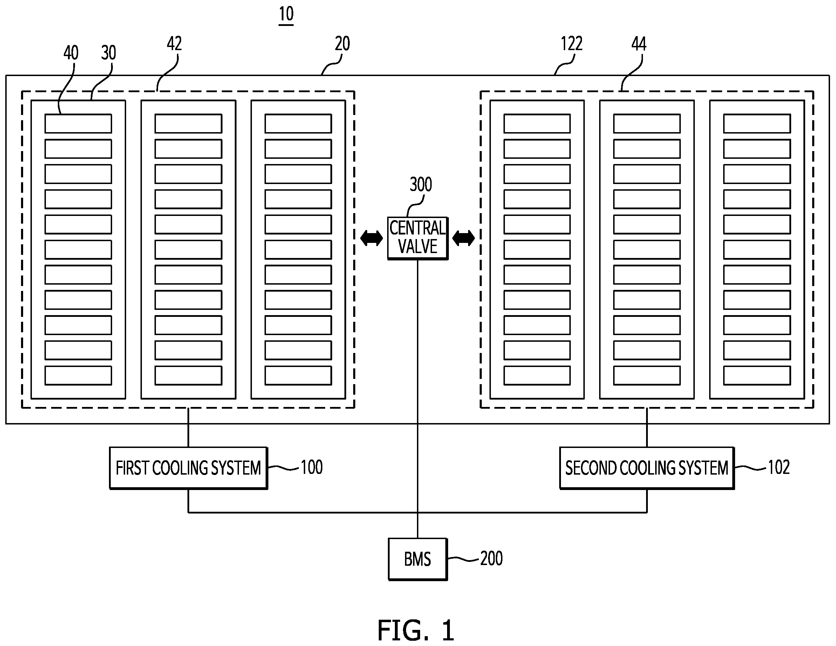

FIG. 1 is a diagram illustrating a configuration of an energy storage system according to some aspects of the present disclosure.

Referring to FIG. 1, an energy storage system 10 according to some aspects of the present disclosure may include a plurality of battery modules 40 each of which includes a plurality of battery cells, a first cooling system 100 that cools a first battery module set 42 among the plurality of battery modules, a second cooling system 102 that cools a second battery module set 44 among the plurality of battery modules, a central valve 300 that controls a flow of a refrigerant between the first cooling system 100 and the second cooling system 102, and a battery management system (BMS) 200 that monitors and controls operations of the plurality of battery modules 40, the first cooling system 100, the second cooling system 102, and the central valve 300.

The battery cells included in each of the plurality of battery modules 40 may be secondary batteries, and may be charged and discharged. The battery cell may include a battery case, and an electrode assembly and electrolyte that are accommodated in the battery case. For example, in the battery cell, the electrode assembly in which a separator is interposed between an anode and a cathode may be stacked or wound, and may be accommodated in the battery case together with the electrolyte by being sealed. The electrode assembly and electrolyte accommodated in the battery case may electrochemically react with one another to generate energy.

The battery module 40 may mean an assembly in which a plurality of battery cells are electrically connected to one another in series or in parallel. The plurality of battery cells included in the battery module 40 may be electrically connected to one another via connection terminals. Further, the plurality of battery modules 40 may be electrically connected to one another in series or in parallel to form a battery rack 30 (e. g. battery pack) which is an assembly of the plurality of battery modules 40. A plurality of battery racks 30 may be electrically connected to one another in series or in parallel to form a battery container 20 which is an assembly of the plurality of battery racks 30. The battery container 20 may be used to store and supply energy.

In some aspects, the first cooling system 100 may cool the first battery module set 42 among the plurality of battery modules 40. Further, the second cooling system 102 may cool the second battery module set 44 among the plurality of battery modules 40. Although not shown, the energy storage system 10 according to some aspects of the present disclosure may include additional cooling systems, such as a third cooling system that cools a third battery module set among the plurality of battery modules, a fourth cooling system that cools a fourth battery module set among the plurality of battery modules, and the like. Therefore, in the energy storage system 10 according to some aspects of the present disclosure, a plurality of cooling systems for cooling the plurality of battery modules 40 (e.g. respectively in a 1-to-1 correlation) may be configured. Thereby, it is possible to efficiently manage temperatures of the battery cells or the battery modules included in the battery container 20.

In some aspects, the energy storage system 10 may include the central valve 300 that controls a flow of a refrigerant or in other words controls and distributes the refrigerant between the first cooling system 100 and the second cooling system 102. As illustrated in FIG. 1, the first cooling system 100 and the second cooling system 102 may be divided focusing on the central valve 300. Accordingly, depending on whether the central valve 300 is opened or closed, the refrigerant may or may not flow from the first cooling system 100 to the second cooling system 102. Similarly, depending on whether the central valve 300 is opened or closed, the refrigerant may or may not flow from the second cooling system 102 to the first cooling system 100.

In some aspects, the central valve 300 may include a manual valve configured to be opened or closed in response to an opening/closing operation of an operator. For example, the central valve 300 may correspond to a ball valve configured to be opened and closed in a circumstance where an operator manipulates a handle at 90°. In a circumstance where the central valve 300 is configured with a manual valve, when the battery management system 200 detects an abnormality in the operation of the first cooling system 100 or the second cooling system 102, operation abnormality information may be transmitted to the operator. Thus, the operator may manually open the central valve 300 such that the cooling system in a normal operation state controls cooling states of the plurality of battery modules connected to the cooling system in which an operation abnormality has occurred. Thereby, it is possible to perform management to maintain cooling efficiency of the entire energy storage system 10.

In some aspects, the central valve 300 may be an automatic valve configured to be opened or closed in response to an electrical control signal that is received. For example, the central valve 300 may correspond to a solenoid valve configured to be opened or closed in response to an electric signal that is received. In a circumstance where the central valve 300 is configured with an automatic valve, when the battery management system 200 detects an abnormality in the operation of the first cooling system 100 or the second cooling system 102, the central valve 300 may be opened according to an electric signal that is provided from the battery management system 200. Thus, the cooling system in a normal operation state may control cooling states of the plurality of battery modules connected to the cooling system in which an operation abnormality has occurred. Accordingly, it is possible to perform management to maintain cooling efficiency of the entire energy storage system 10.

In some aspects, the energy storage system 10 may include the battery management system 200 that monitors and controls operations of the plurality of battery modules 40, the first cooling system 100, the second cooling system 102, and the central valve 300. Here, the battery management system 200 may control the central valve 300 to control the flow of the refrigerant (or in other words may control the central valve 300 to control and distribute the flow of the refrigerant) between the first cooling system 100 and the second cooling system 102 depending on whether an abnormality occurs in the operation of any one of the first cooling system 100 and the second cooling system 102. For example, in a circumstance where the battery management system 200 detects an abnormality in the operation of the first cooling system 100, the battery management system 200 may control the central valve 300 such that the central valve 300 is opened. Thereby, it is possible to control the flow of the refrigerant such that the refrigerant flows between the first cooling system 100 and the second cooling system 102. Conversely, in a circumstance where the battery management system 200 detects an abnormality in the operation of the second cooling system 102, the battery management system 200 may control the central valve 300 such that the central valve 300 is opened. Thereby, it is possible to control the flow of the refrigerant such that the refrigerant flows between the first cooling system 100 and the second cooling system 102. With this configuration, even in a circumstance where an abnormality occurs in the operation of any one of the first cooling system 100 and the second cooling system 102 included in the energy storage system 10, by controlling the flow of the refrigerant through the control of the central valve 300, it is possible to manage the energy storage system 10 such that a temperature deviation between the battery cells included in each of the first battery module set 42 and the second battery module set 44 is prevented from increasing. According to the management, the efficiency of the energy storage system 10 can be improved, and the energy storage system 10 can stably supply power.

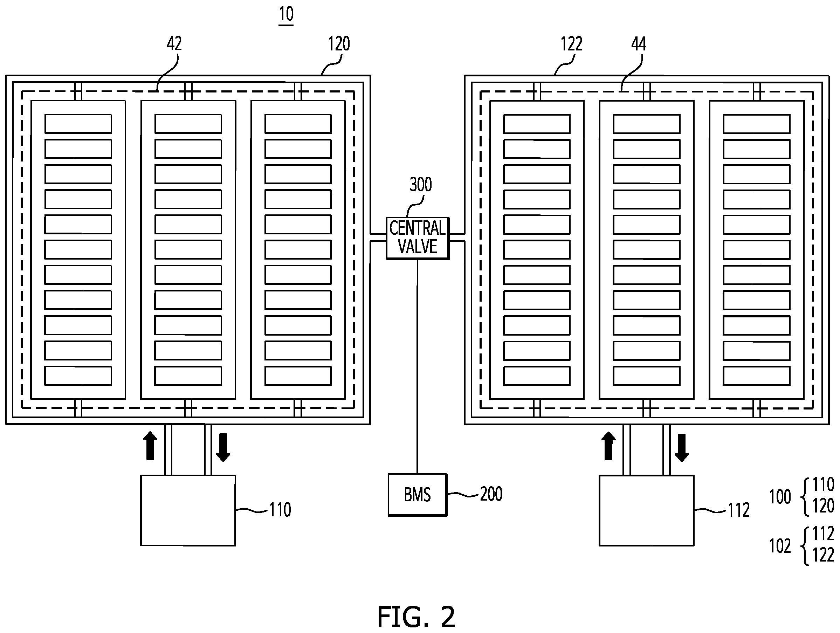

FIG. 2 is a diagram illustrating a specific configuration of a cooling system in the energy storage system of FIG. 1. Referring to FIG. 2, the first cooling system 100 may include a first cooler 110 and a first cooling passage 120, and the second cooling system 102 may include a second cooler 112 and a second cooling passage 122.

In some aspects, the first cooler 110 may be configured to cool the first battery module set 42 among the plurality of battery modules, and the second cooler 112 may be configured to cool the second battery module set 44 among the plurality of battery modules. Further, the first cooling passage 120 may be a passage for circulating the refrigerant between the first cooler 110 and the first battery module set 42, and the second cooling passage 122 may be a passage for circulating the refrigerant between the second cooler 112 and the second battery module set 44.

In some aspects, an industrial chiller or the like may be used for each of the first cooler 110 and the second cooler 112. The industrial chiller may include components for circulating a refrigerant, such as an evaporator, a compressor, a condenser, an expansion valve, and a pump. The industrial chiller may effectively cool a system by cooling a refrigerant, which circulates through the system to absorb heat and of which a temperature is increased due to heat absorption, to a low temperature, and causing the refrigerant to circulate through the system again to absorb heat. A specific configuration of the industrial chiller is well known, and thus, a detailed description thereof will be omitted.

In some aspects, the first cooling passage 120 may be disposed to allow the refrigerant, which is output from the first cooler 110 and has a low temperature, to circulate around the first battery module set 42 to cool the first battery module set 42. Therefore, the first cooling passage 120 may be disposed at a surrounding area of each of the battery modules or the battery cells included in the first battery module set 42. Here, the surrounding area of each of the battery modules or the battery cells may mean an area or a location where the refrigerant has a sufficient distance to absorb heat of each of the battery modules or the battery cells. Similarly, the second cooling passage 122 may be disposed to allow the refrigerant, which is output from the second cooler 112 and has a low temperature, to circulate around the second battery module set 44 to cool the second battery module set 44.

In some aspects, the battery management system 200 may control the central valve 300 to control the flow of the refrigerant between the first cooling passage 120 and the second cooling passage 122 depending on whether an abnormality occurs in the operation of any one of the first cooler 110 and the second cooler 112. For example, in a circumstance where the battery management system 200 detects an abnormality in the operation of the first cooler 110 or the second cooler 112, the battery management system 200 may control the central valve 300 such that the central valve 300 is opened. Thereby, it is possible to control the flow of the refrigerant such that the refrigerant flows between the first cooling passage 120 and the second cooling passage 122.

In some aspects, each of the first cooling system 100 and the second cooling system 102 may include a temperature sensor installed at each of the first cooling passage 120 and the second cooling passage 122. The battery management system 200 may be configured to monitor whether an abnormally occurs in the operation of any one of the first cooling system 100 and the second cooling system 102 based on temperature information that is output from the temperature sensor.

With this configuration, even in a circumstance where an abnormality occurs in the operation of any one of the first cooling system 100 and the second cooling system 102 included in the energy storage system 10, by controlling the flow of the refrigerant through the control of the central valve 300, it is possible to manage the energy storage system 10 such that a temperature deviation between the battery cells included in each of the first battery module set 42 and the second battery module set 44 is prevented from increasing. According to the management, the efficiency of the energy storage system 10 can be improved, and the energy storage system 10 can stably supply power.

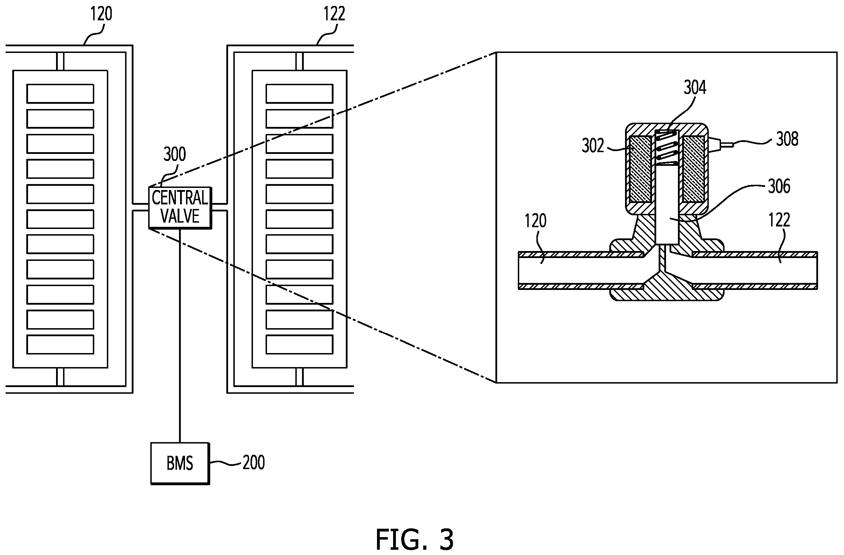

FIG. 3 is a diagram for explaining a principle of an operation of the central valve according to some aspects of the present disclosure. Referring to FIG. 3, the central valve 300 may be disposed between the first cooling passage 120 and the second cooling passage 122 to control the flow of the refrigerant between the first cooling passage 120 and the second cooling passage 122.

In some aspects, the central valve 300 may be a solenoid valve including a sensor 308 therein. In some aspects, the central valve 300 may be electrically connected to the battery management system 200, and may transmit and receive control signals through the sensor 308. For example, in a circumstance where the battery management system 200 detects an abnormality in the operation of any one of the first cooling system and the second cooling system, the battery management system 200 may transmit a control signal to the central valve 300 through the sensor 308 to control the central valve 300 such that the central valve 300 is opened. As another example, in a circumstance where the battery management system 200 detects an abnormality in the operation of any one of the first cooling system and the second cooling system, the battery management system 200 may transmit a control signal to a first relay, and the first relay may transmit the control signal to the central valve 300 in response to reception of the control signal. Therefore, the battery management system 200 may control the central valve 300 through the first relay such that the central valve 300 is opened.

In some aspects, in a circumstance where the central valve 300 is a solenoid valve, the central valve 300 may include a coil 302, a spring 304, a plunger 306, and a sensor 308. In a circumstance where the central valve 300 is closed, as illustrated in FIG. 3, the flow of the refrigerant between the first cooling passage 120 and the second cooling passage 122 may be blocked by the plunger 306. In some aspects, the plunger 306 may be fixed in the central valve 300 to block the flow of the refrigerant by an elastic force of the spring 304. In a circumstance where a control signal to open the central valve 300 is received by the sensor 308, current may flow through the coil 302 in the central valve 300. When current flows through the coil 302, a magnetic field may be formed around the coil 302. At this time, the magnetic field formed around the coil 302 attracts the plunger 306, and thus the central valve 300 may be opened.

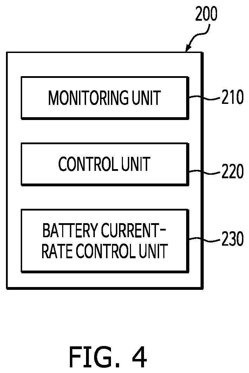

FIG. 4 is a block diagram illustrating an internal configuration of the battery management system according to some aspects of the present disclosure. Referring to FIG. 4, the battery management system 200 may include a monitoring unit 210, a control unit 220, and a battery current-rate control unit 230.

In some aspects, the monitoring unit 210 may monitor operations of the plurality of battery modules, the first cooling system, the second cooling system, and the central valve. For example, each of the first cooling system and the second cooling system may include the temperature sensor installed at each of the first cooling passage and the second cooling passage, and the monitoring unit 210 may monitor whether an abnormality occurs in the operation of any one of the first cooling system and the second cooling system based on temperature information that is output from the temperature sensor. In some aspects, in a circumstance where, as compared with temperature information that is measured in a normal state, a temperature deviation between the first cooling system and the second cooling system increases to a first threshold value or higher, or the temperature of the first cooling system or the second cooling system increases to a second threshold value or higher, the battery management system 200 may determine whether an abnormality occurs in the operation of any one of the first cooling system and the second cooling system. Further, in a circumstance where the monitoring unit 210 detects an abnormality in the operation of any one of the first cooling system and the second cooling system, the monitoring unit 210 may monitor an operation of a third cooling system that is operated instead of the cooling system in which an abnormality in the operation has occurred.

In some aspects, the control unit 220 may control the central valve to control the flow of the refrigerant between the first cooling system and the second cooling system depending on whether an abnormality occurs in the operation of any one of the first cooling system and the second cooling system. For example, in a circumstance where the control unit 220 detects an abnormality in the operation of any one of the first cooling system and the second cooling system, the control unit 220 may transmit a control signal to the central valve to control the central valve such that the central valve is opened. As another example, in a circumstance where the control unit 220 detects an abnormality in the operation of any one of the first cooling system and the second cooling system, the control unit 220 may transmit a control signal to a first relay, and the first relay may control the central valve in response to reception of the control signal such that the central valve is opened.

In some aspects, depending on whether an abnormality occurs in the operation of any one of the first cooling system and the second cooling system, the control unit 220 may control a shut-off valve related to the cooling system in which an abnormality in the operation has occurred. Thereby, it is possible to control the flow of the refrigerant between the cooler and the cooling passage included in the cooling system in which an abnormality in the operation has occurred. For example, in a circumstance where the control unit 220 detects an abnormality in the operation of the first cooling system, the control unit 220 may transmit a control signal to a shut-off valve installed between the first cooler and the first cooling passage to control the shut-off valve such that the shut-off valve is closed. As another example, in a circumstance where the control unit 220 detects an abnormality in the operation of the first cooling system, the control unit 220 may transmit a control signal to a second relay, and the second relay may control a shut-off valve installed between the first cooler and the first cooling passage in response to reception of the control signal such that the shut-off valve is closed.

In some aspects, in a circumstance where the third cooling system is operated instead of the cooling system in which an abnormality in the operation has occurred between the first cooling system and the second cooling system, the control unit 220 may control the central valve such that the central valve is closed. Further, in a circumstance where the third cooling system is operated instead of the cooling system in which an abnormality in the operation has occurred between the first cooling system and the second cooling system, the control unit 220 may control a shut-off valve related to the third cooling system such that the shut-off valve is opened. Therefore, the third cooling system may be connected to supply the refrigerant to the cooling passage connected to the cooling system in which an abnormality in the operation has occurred.

In some aspects, in a circumstance where an abnormality in the operation of any one of the first cooling system and the second cooling system is detected, the battery current-rate control unit 230 may control a current-rate (C-rate) of the plurality of battery cells included in each of the plurality of battery modules such that the current-rate is reduced. For example, in a circumstance where an abnormality in the operation of any one of the first cooling system and the second cooling system is detected, the battery current-rate control unit 230 may control the current-rate of the plurality of battery cells such that the current-rate is reduced by half. In a circumstance where an abnormality in the operation of any one of the first cooling system and the second cooling system is detected, the battery current-rate control unit 230 may reduce the current-rate of the battery cells to reduce heat generation in the battery cells. Thereby, it is possible to prevent the cooling system in which an abnormality in the operation is not detected from being overloaded.

In some aspects, further, in a circumstance where the third cooling system is operated instead of the cooling system in which an abnormality in the operation has occurred between the first cooling system and the second cooling system, the battery current-rate control unit 230 may control the current-rate of the plurality of battery cells included in each of the plurality of battery modules such that the current-rate is increased. For example, in a circumstance where the third cooling system is operated instead of the cooling system in which an abnormality in the operation has occurred between the first cooling system and the second cooling system, the battery current-rate control unit 230 may control the current-rate of the plurality of battery cells such that the current-rate is increased by two times.

The battery management system 200 is not limited to the above-mentioned configurations, and may include additional configurations and perform additional functions.

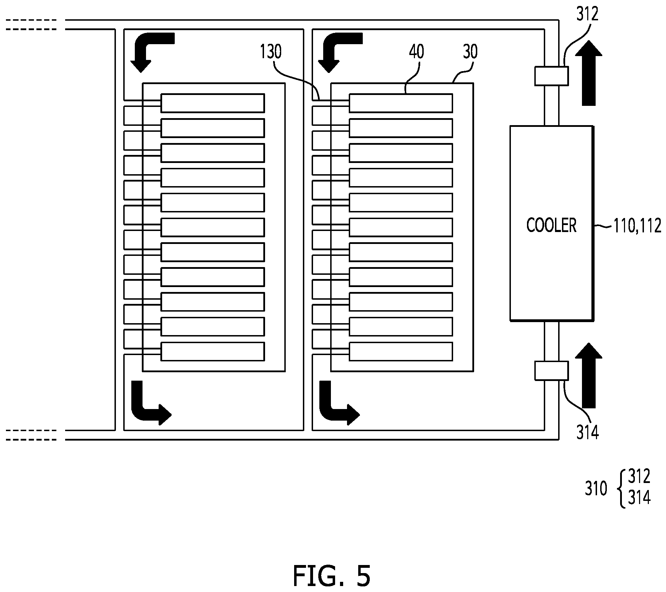

FIG. 5 is a diagram for explaining the flow of the refrigerant according to some aspects of the present disclosure.

In some aspects, the refrigerant output from the cooler 110 or 112 may circulate through each battery rack 30, and cool each battery module 40 while circulating through each battery module 40 via a branch passage 130. Further, as the refrigerant circulates through the cooling passage to absorb heat, the temperature of the refrigerant may be increased due to heat absorption, and the refrigerant having a high temperature may enter the cooler 110 or 112 again.

In some aspects, the refrigerant that cools the plurality of battery modules 40 may be a coolant.

In some aspects, an outlet shut-off valve 312 may be disposed at an outlet of the cooler 110 or 112. The outlet shut-off valve 312 may block the flow of the refrigerant output from the cooler 110 or 112. In some aspects, an inlet shut-off valve 314 may be disposed at an inlet of the cooler 110 or 112. The inlet shut-off valve 314 may block the flow of the refrigerant entering the cooler 110 or 112. Here, the cooling system may include only one of the outlet shut-off valve 312 and the inlet shut-off valve 314, or may include both the outlet shut-off valve 312 and the inlet shut-off valve 314.

In some aspects, in a circumstance where an abnormality in the operation of any one of the first cooling system and the second cooling system is detected, shut-off valves 310 connected to the cooler of the cooling system in which an abnormality in the operation has occurred may be controlled to be closed. Here, the shut-off valve 310 may be closed in response to reception of the control signal from the battery management system. In other aspects, the battery management system may transmit a control signal to a second relay, and the second relay may control the shut-off valve in response to reception of the control signal such that the shut-off valve is closed.

In some aspects, in a circumstance where the third cooling system is operated instead of the cooling system in which an abnormality in the operation has occurred between the first cooling system and the second cooling system, the shut-off valves 310 connected to the cooler of the third cooling system may be controlled to be opened. Therefore, the cooler of the third cooling system may provide the refrigerant to the related battery modules instead of the cooling system in which an abnormality in the operation has occurred.

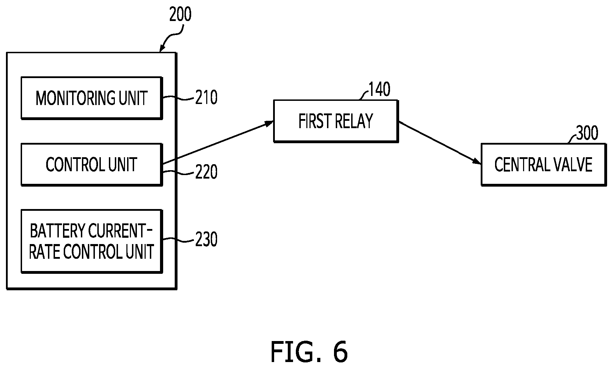

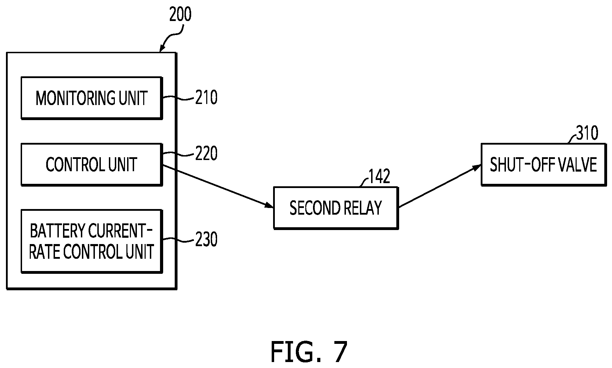

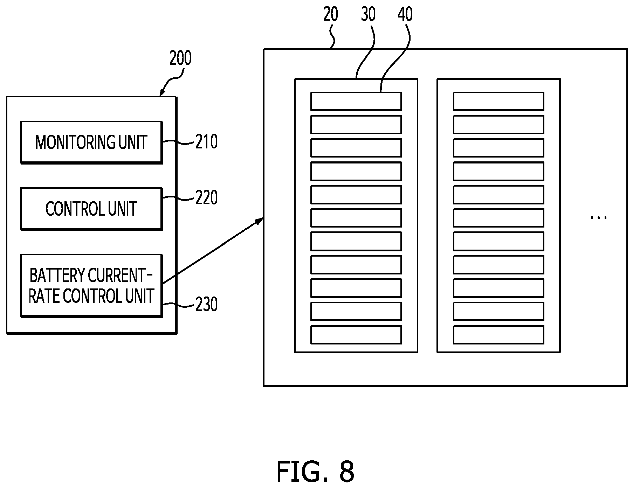

FIG. 6 is a diagram for explaining a process in which the battery management system according to some aspects of the present disclosure controls the central valve. FIG. 7 is a diagram for explaining a process in which the battery management system according to some aspects of the present disclosure controls the shut-off valve. FIG. 8 is a diagram for explaining a process in which the battery management system according to some aspects of the present disclosure controls a battery current-rate.

In some aspects, referring to FIG. 6, the control unit 220 may control the central valve 300 to control the flow of the refrigerant between the first cooling system and the second cooling system depending on whether an abnormality occurs in the operation of any one of the first cooling system and the second cooling system. For example, in a circumstance where the control unit 220 detects an abnormality in the operation of any one of the first cooling system and the second cooling system, the control unit 220 may transmit a control signal to a first relay 140, and the first relay 140 may control the central valve 300 in response to reception of the control signal such that the central valve 300 is opened.

In some aspects, in a circumstance where the third cooling system is operated instead of the cooling system in which an abnormality in the operation has occurred between the first cooling system and the second cooling system, the control unit 220 may control the central valve 300 such that the central valve 300 is closed.

In some aspects, the first relay 140 may be a mechanical contactor that is turned on and off by a magnetic force of a coil, or a semiconductor switch such as a metal oxide semiconductor field effect transistor (MOSFET). The first relay 140 may be configured to receive a control signal from the battery management system 200, and transmit the control signal to the central valve 300 in response to reception of the control signal. The first relay 140 may be configured with a plurality of relays, and may be disposed in the first cooler or the second cooler. As another example, the first relay 140 may be included as an internal component of the battery management system 200. In FIG. 6, although the first relay 140 is illustrated as an external component of the battery management system 200, the present disclosure is not limited thereto.

In some aspects, referring to FIG. 7, depending on whether an abnormality occurs in the operation of any one of the first cooling system and the second cooling system, the control unit 220 may control a shut-off valve 310 related to the cooling system in which an abnormality in the operation has occurred. Thereby, it is possible to control the flow of the refrigerant between the cooler and the cooling passage included in the cooling system in which an abnormality in the operation has occurred. For example, in a circumstance where the control unit 220 detects an abnormality in the operation of the first cooling system, the control unit 220 may transmit a control signal to a second relay 142, and the second relay 142 may control the shut-off valve 310 installed between the first cooler and the first cooling passage in response to reception of the control signal such that the shut-off valve 310 is closed.

In some aspects, in a circumstance where the third cooling system is operated instead of the cooling system in which an abnormality in the operation has occurred between the first cooling system and the second cooling system, the control unit 220 may control the shut-off valve 310 related to the third cooling system such that the shut-off valve 310 is opened. For example, in a circumstance where an abnormality in the operation of the first cooling system occurs, a shut-off valve installed between the first cooler and the first cooling passage may be closed. Thereby, the flow of the refrigerant in the first cooling passage may be stopped. In some aspects, a shut-off valve related to the third cooling system may be opened. Thereby, the third cooler of the third cooling system may be connected to the first cooling passage.

In some aspects, the second relay 142 may be a mechanical contactor that is turned on and off by a magnetic force of a coil, or a semiconductor switch such as a MOSFET. The second relay 142 may be configured to receive a control signal from the battery management system 200, and transmit the control signal to the shut-off valve 310 in response to reception of the control signal. The second relay 142 may be configured with a plurality of relays, and may be disposed in the first cooler or the second cooler. As another example, the second relay 142 may be included as an internal component of the battery management system 200. In FIG. 7, although the second relay 142 is illustrated as an external component of the battery management system 200, the present disclosure is not limited thereto.

In some aspects, referring to FIG. 8, in a circumstance where an abnormality in the operation of any one of the first cooling system and the second cooling system is detected, the battery current-rate control unit 230 may control a current-rate (C-rate) of the plurality of battery cells included in each of the plurality of battery modules 40 such that the current-rate is reduced. For example, in a circumstance where an abnormality in the operation of any one of the first cooling system and the second cooling system is detected, the battery current-rate control unit 230 may control the current-rate of the plurality of battery cells such that the current-rate is reduced by half.

In some aspects, in a circumstance where the third cooling system is operated instead of the cooling system in which an abnormality in the operation has occurred between the first cooling system and the second cooling system, the battery current-rate control unit 230 may control the current-rate of the plurality of battery cells included in each of the plurality of battery modules 40 such that the current-rate is increased again. For example, in a circumstance where the third cooling system is operated instead of the cooling system in which an abnormality in the operation has occurred between the first cooling system and the second cooling system, the battery current-rate control unit 230 may control the current-rate of the plurality of battery cells such that the current-rate is increased again by two times.

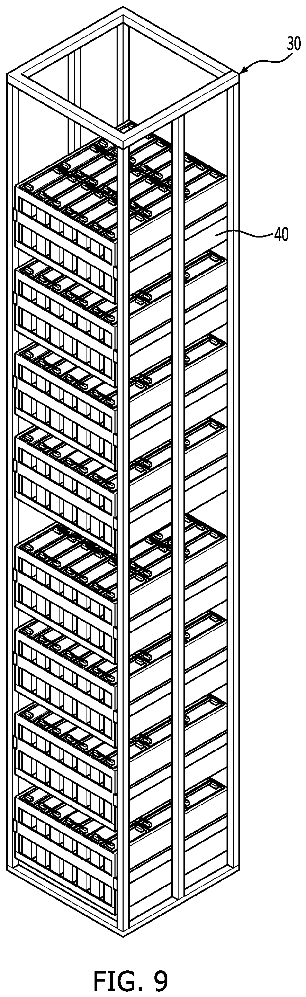

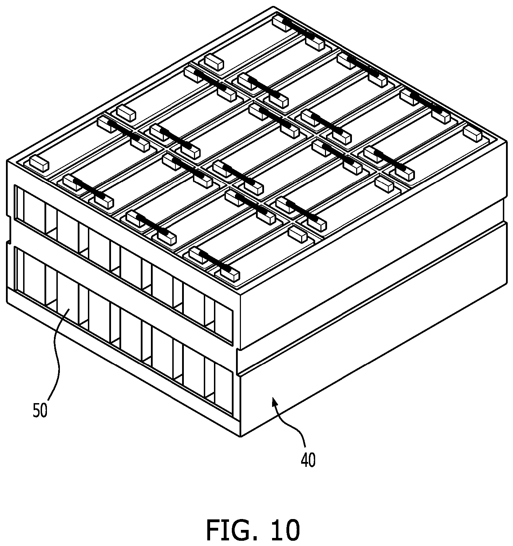

FIG. 9 is a perspective view of a battery rack according to some aspects of the present disclosure. FIG. 10 is a perspective view of a battery module according to some aspects of the present disclosure. Referring to FIG. 9 and FIG. 10, the energy storage system according to some aspects of the present disclosure may include battery modules 40 each of which includes a plurality of battery cells 50 and battery racks 30 each of which includes a plurality of battery modules 40. In FIG. 9, eight battery modules 40 may be included in the battery rack 30. This is an example, and one or more battery modules 40 may be included in the battery rack 30.

The battery module 40 may be an assembly in which a plurality of battery cells 50 are connected to one another in series or in parallel, and may include the plurality of battery cells 50 and a frame for accommodating the battery cells 50. In the battery module 40, the plurality of battery cells 50 may be connected to one another in series using a plurality of connection terminals. One connection terminal may electrically connect a cathode terminal of one battery cell 50 to an anode terminal of another battery cell 50. In this way, the plurality of battery cells 50 may be connected to one another in series. The present disclosure is not limited thereto, and the plurality of battery cells 50 may be connected to one another in parallel or in series using the connection terminals. The plurality of battery cells 50 in a plurality of rows may be included in the battery module 40.

The frame of the battery module 40 may accommodate and protect the battery cells 50, and may be detachably fixed to the battery rack 30. For example, the battery rack 30 may be a cabinet that accommodates eight battery modules 40. According to some aspects, the energy storage system may include at least one battery rack 30, and a plurality of battery racks 30 may be electrically connected to one another. The battery rack 30 may have high power terminals (terminals for an anode and a cathode) exposed to the outside, and the high power terminals of each battery rack 30 may be connected in parallel. The battery rack 30 may include the plurality of battery modules 40 in which the plurality of battery cells 50 are electrically connected to one another. Each battery rack 30 may include the plurality of battery modules 40 that are electrically connected to one another. The plurality of battery modules 40 included in each battery rack 30 may be connected to one another in series and/or in parallel. The plurality of battery modules 40 may be accommodated along a height direction of the battery rack 30. Further, although not illustrated, a plurality of battery racks 30 may be electrically connected to one another to form a battery container. The battery container may be an assembly of the plurality of battery cells, and may be used as an energy storage system to store and supply power.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### DESCRIPTION OF SOME REFERENCE SYMBOLS

10: Energy storage system
20: Battery container
30: Battery rack
40: Battery module
100: First cooling system
102: Second cooling system
200: Battery management system
300: Central valve

## Claims

1. An energy storage system (10) comprising:
a plurality of battery modules (40) each of which battery module (40) includes a plurality of battery cells (50);
a first cooling system (100) configured to cool a first battery module set (42) among the plurality of battery modules (40);
a second cooling system (102) configured to cool a second battery module set (44) among the plurality of battery modules (40);
a central valve (300) configured to control a flow of a refrigerant between the first cooling system (100) and the second cooling system (102); and
a battery management system (200) configured to monitor and control operations of the plurality of battery modules (40), the first cooling system (100), the second cooling system (102), and the central valve (300), wherein
the battery management system (200) is configured to control the central valve (300) to control the flow of the refrigerant between the first cooling system (100) and the second cooling system (102) depending on whether an abnormality occurs in the operation of any one of the first cooling system (100) and the second cooling system (102).

2. The energy storage system (10) according to claim 1, wherein
the first cooling system (100) comprises:
a first cooler (110) configured to cool the first battery module set (42), and
a first cooling passage (120) configured to allow the refrigerant to circulate between the first cooler (110) and the first battery module set (42), and
the second cooling system (102) comprises:
a second cooler (112) configured to cool the second battery module set (44), and
a second cooling passage (122) configured to allow the refrigerant to circulate between the second cooler (112) and the second battery module set (44).

3. The energy storage system (10) according to claim 2, wherein:
each of the first cooling system (100) and the second cooling system (102) comprises a temperature sensor installed at the first cooling passage (120) or the second cooling passage (122), and
the battery management system (200) is configured to monitor whether the abnormality occurs in the operation of any one of the first cooling system (100) and the second cooling system (102) based on temperature information that is output from the temperature sensor.

4. The energy storage system (10) according to claim 3, wherein:
the battery management system (200) is configured to determine that the abnormality occurs
when a temperature deviation between the first cooling system (100) and the second cooling system (102) increases to a first threshold value or higher, and/or
when a temperature of the first cooling system (100) and/or the second cooling system (102) increases to a second threshold value or higher.

5. The energy storage system (10) according to any one of claims 1 to 4, further comprising:
a first relay (140), wherein:
in a circumstance where the abnormality in the operation of any one of the first cooling system (100) and the second cooling system (102) is detected, the battery management system (200) is configured to transmit a control signal to the first relay (140), and
the first relay (140) is configured to control to open the central valve (300) in response to reception of the control signal.

6. The energy storage system (10) according to any one of claims 1 to 5, further comprising:
a second relay (142), wherein:
in a circumstance where the abnormality in the operation of any one of the first cooling system (100) and the second cooling system (102) is detected, the battery management system (200) is configured to transmit a control signal to the second relay (142), and
the second relay (142) is configured to control to close a shut-off valve (310, 312, 314) related to a cooling system (100, 102) of any one of the first cooling system (100) and the second cooling system (102) in which the abnormality in the operation has occurred in response to reception of the control signal.

7. The energy storage system (10) according to any one of claims 1 to 6, wherein
in a circumstance where the abnormality in the operation of any one of the first cooling system (100) and the second cooling system (102) is detected, the battery management system (200) is configured to control a current-rate of the plurality of battery cells (50) included in each of the plurality of battery modules (40) such that the current-rate of the plurality of battery cells (50) is reduced.

8. The energy storage system (10) according to claim 7, wherein
in a circumstance where the abnormality in the operation of any one of the first cooling system (100) and the second cooling system (102) is detected, the battery management system (200) is configured to control the current-rate of the plurality of battery cells (50) such that the current-rate of the plurality of battery cells (50) is reduced by half.

9. The energy storage system (10) according to any one of claims 1 to 8, further comprising:
a third cooling system, wherein
in a circumstance where the abnormality in the operation of any one of the first cooling system (100) and the second cooling system (102) is detected, the battery management system (200) is configured to cause the third cooling system to operate to cool at least a part of the plurality of battery modules (40) instead of a cooling system (100, 102) of any one of the first cooling system (100) and the second cooling system (102) in which the abnormality in the operation has occurred.

10. The energy storage system (10) according to claim 9, wherein
the battery management system (200) is configured to close the central valve (300) in a circumstance where the third cooling system is operated.

11. The energy storage system (10) according to claim 9 or 10, wherein
in a circumstance where the third cooling system is operated, the battery management system (200) is configured to control to open a shut-off valve (310) related to the third cooling system.

12. The energy storage system (10) according to any one of claims 9 to 11, wherein
in a circumstance where the third cooling system is operated, the battery management system (200) is configured to control a current-rate of the plurality of battery cells (50) included in each of the plurality of battery modules (40) such that the current-rate of the plurality of battery cells (50) is increased.

13. The energy storage system (10) according to claim 12, wherein
in a circumstance where the third cooling system is operated, the battery management system (200) is configured to control the current-rate of the plurality of battery cells (50) such that the current-rate of the plurality of battery cells (50) is increased by two times.

14. The energy storage system (10) according to claim any one of claims 1 to 13, wherein the refrigerant is a coolant.

15. The energy storage system (10) according to claim any one of claims 1 to 14, further comprising:
a plurality of battery racks (30) each of which battery rack (30) comprises the plurality of battery modules (40); and
at least one battery container (20) that comprises the plurality of battery racks (30).
